# NEUE EUROPÄISCHE PATENTSCHRIFT

(11) **EP 2 380 830 B2**
(45) Veröffentlichungstag und Bekanntmachung des Hinweises auf die Entscheidung über den Einspruch: **01.06.2016**
(45) Hinweis auf die Patenterteilung: 26.12.2012
(21) Anmeldenummer: 11003062.4
(22) Anmeldetag: 12.04.2011
(51) Int. Cl.: B65G 15/50, B65G 43/08, B65G 47/68

(54) **Steuerungsverfahren für einen Linienvereiniger und Linienvereiniger**
Control method for a line connector
Procédé de commande pour un dispositif d'unification de lignes

(30) Priorität: 20.04.2010 DE 102010015839
(43) Veröffentlichungstag der Anmeldung: 26.10.2011
(73) Patentinhaber: Bizerba GmbH & Co. KG, 72336 Balingen (DE)
(72) Erfinder: Hauck, Timo, 67663 Kaiserslautern (DE)
(74) Vertreter: Louis Pöhlau Lohrentz

(56) Entgegenhaltungen:
- EP-A1- 0 802 131
- EP-A1- 1 184 310
- WO-A1-01/74693
- WO-A1-96/13340
- DE-A1-102004 035 821
- DE-A1-102005 055 755
- DE-A1-102008 005 540
- DE-C2- 10 134 194
- DE-T2- 69 804 641
- US-A- 5 070 995
- US-A1- 2002 005 333
- US-A1- 2003 141 165
- US-A1- 2004 104 100
- US-A1- 2009 065 330
- WWW.IMGROUP.IT/REALIZZAZIONI/24806/CASE_STU DIES.ASPX: 'Ausdruck "LM Group - Handling Systems"'
- 'Broschüre "LM Dividers / Convergers"'

## Beschreibung

Die Erfindung betrifft ein Steuerungsverfahren zum Zusammenführen von Produktströmen nach dem Oberbegriff des Anspruchs 1 und einen Linienvereiniger nach dem Oberbegriff des Anspruchs 13.

In der Praxis werden Linienvereiniger hauptsächlich zum Transportieren bzw. Zusammenführen von Verpackungen oder Stückgut verwendet, welche als kontinuierliche Produktströme gefordert werden. Dabei werden solche Linienvereiniger mit Steuerungsvorrichtungen versehen, die den Produktfluss steuern.

Aus der EP 1 516 833 A1 ist eine Bandfördervorrichtung zum Transport oder Sortieren von Verpackungen mit zwei parallelen Förderbändern bekannt. Zum Sortieren wird der Antrieb der einzelnen Förderbänder gesteuert. Der Antrieb der Förderbänder wird über einen Hubzylinder und eine Reibrolle zu bzw. abgeschaltet.

Aus der DE 37 18 020 C2 ist eine Fördervorrichtung bekannt, die Verpackungen, die in mehreren parallelen Produktströmen angeliefert werden zu einer einzigen Abführlinie zusammenführt. Die Verpackungen werden dabei von mehreren parallel verlaufenden Schnüren transportiert, die über einen Motor gemeinsam angetrieben werden. Die Steuerung erfolgt, indem die parallelen Packungen phasenweise angehalten werden, so dass immer nur eine Packung abtransportiert wird. Über eine Hubeinrichtung werden die einzelnen Päckchen angehalten, indem sie von den Schnüren abgehoben und so der Kraftschluss getrennt und damit der Transport der Päckchen unterbrochen wird.

Aus der DE 35 38 860 A1 ist eine Sortiervorrichtung für Verpackungen bekannt, die mehrere Verpackungen so auf einem Band sortiert, dass diese einen vordefinierten Abstand zueinander aufweisen. Eine Steuervorrichtung steuert dabei über Produktfühler die Verpackungen.

Das Dokument WO 01/74693 A1 offenbart ein Steuerungsverfahren und einen Linienvereiniger gemäß den Oberbegriffen der Ansprüche 1 und 13. In diesem Dokument wird der Abstand zwischen zwei nacheinander beförderten Produkten durch eine Steuervorrichtung kontrolliert.

Der Erfindung liegt die Aufgabe zugrunde, ein Steuerungsverfahren für Linienvereiniger und einen Linienvereiniger zu schaffen, die eine einfache Bedienung und einen flexiblen Einsatz der Steuerung für unterschiedliche praktische Anwendungen ermöglichten.

Diese Aufgabe wird erfindungsgemäß durch ein Steuerungsverfahren bzw. einen Linienvereiniger mit den Merkmalen des Anspruchs 1 bzw. 13 gelöst.

Für die Steuerung eines Linienvereinigers werden mehrere Steuerdaten bzw. Steuerparameter benötigt. Diese Steuerdaten werden in einem Speicher nach Produktkennzeichnungen geordnet abgelegt. Anhand einer Produktkennzeichnung werden die zu der Produktkennzeichnung gehörenden Steuerdaten selektiert und der Linienvereiniger damit gesteuert, indem zumindest die Zuführvorrichtungen entsprechend angesteuert bzw. eingestellt werden.

Über eine Zuführvorrichtung wird ein Produktstrom, bestehend aus mehreren einzelnen Packungen, geführt. Mit mehreren Zuführvorrichtungen können mehrere Produktströme gefördert werden. Die Zuführvorrichtungen übergeben die Produktströme an eine Abführvorrichtung indem die einzelnen Pakete der Produktströme nacheinander an die Abführvorrichtung übergeben werden und so einen Produktstrom bilden.

Zum Steuern dieses Vorganges wird die Produktförderung über die Zuführvorrichtungen anhand von Steuerdaten gesteuert, indem beispielsweise ein Antrieb der Zuführvorrichtung eingeschaltet oder ausgeschaltet oder eingekuppelt oder ausgekuppelt, oder dessen Geschwindigkeit geregelt wird.

Auch können die Abmessungen der Produkte bei der Ansteuerung der Zuführvorrichtungen berücksichtigt werden. Kleinere Pakete können in kürzeren Abständen gefördert werden als größere Pakete.

Auch kann je nach Produkt eine bestimmte Geschwindigkeit vorgegeben sein, die bei der Förderung einzuhalten ist. So werden in der Praxis von dem vereinigten Produktstrom eines Linienvereinigers oftmals Kontrollwagen beschickt, die je nach Gewicht oder Abmessungen der Pakete nur eine gewisse Geschwindigkeit bzw. Taktzeit erlauben.

Auch kann es je nach Breite des Produktes notwendig sein, zwei oder mehr nebeneinander liegende Zuführvorrichtungen zusammenzuschalten, um beispielsweise auch Pakete fördern zu können, deren Breite die Breite der Zuführvorrichtung überschreitet. Auch kann vorgesehen sein, dass einzelne Förderstrecken in Form von Sortiermodulen vorgesehen sind, die ihrerseits zu Zuführvorrichtungen zusammengeschaltet werden, wobei eine Zuführvorrichtung mindestens ein Sortiermodul umfasst, und abhängig der Produktbreite auch mehrere nebeneinander liegende Sortiermodule umfassen kann.

Die Steuerung kann zur Steuerung die gespeicherten Steuerdaten direkt verwenden, oder diese in Steuerparameter umrechnen. Insbesondere können bei einer Umrechnung noch Signale von Sensoren berücksichtigt werden, um eine besonders genaue Steuerung zu ermöglichen.

Als Steuerdaten können somit Produktkennzeichnungsabhängig insbesondere die Länge, die Breite, die Höhe, das Gewicht, die minimale oder maximale oder durchschnittliche Geschwindigkeit oder Taktzeit eines Produktes bzw. eines Paketes gespeichert sein.

Mit der Produktkennzeichnung werden die Steuerdaten automatisch berücksichtigt und somit ein optimaler Betrieb mit einer hohen Auslastung und damit großem Durchsatz ermöglicht. Es entfällt damit die bei einer Umstellung der Linie notwendige umständliche manuelle Eingabe von Hand dieser Parameter.

Von Vorteil ist, wenn die Produktkennzeichnung von einem Sensor, insbesondere einem Barcodescanner oder einer RFID-Lesevorrichtung automatisch von einem Paket eingelesen wird. Alternativ kann die Produktkennzeichnung auch von einem an die Steuerungsvorrichtung angeschlossenen Gerät, z. B. einer Verpackungsmaschine oder einem Steuercomputer eingegeben werden. So kann die Steuerung des Linienvereinigers anhand einer an dem Paket angebrachten Produktkennzeichnung vollautomatisch ablaufen.

Als Steuerdaten sind auch die durchschnittlichen Transportzeiten gespeichert. Über Sensoren kann so die tatsächliche Transportzeit mit der gespeicherten Transportzeit verglichen werden Bei Abweichungen, die beispielsweise infolge von Hindernissen, verölten Antriebs-Bändern oder Schlupf verursacht sein können, kann der Fehler automatisch erkannt bzw. gemeldet werden.

Ebenso ist vorgesehen, dass die Steuerdaten auch Daten zur Kalibrierung des Linienvereinigers umfassen. In der Praxis besitzen die Zuführvorrichtungen oder Abführvorrichtungen endliche Ansprechzeiten, die innerhalb eines Gerätes unterschiedlich bemessen sein können. So ist vorgesehen, dass für jede Zuführvorrichtung und/oder die Abführvorrichtung die Steuerdaten erfasstwerden, indem über Sensoren die Ansprechzeit von der Aussendung eines Steuerbefehls bis zu dessen Umsetzung gemessen wird Solche Ansprechzeiten hängen beispielsweise von Konstruktionstoleranzen oder der Länge von Zuleitungen sowie von Verschleiß ab. Insbesondere bei pneumatisch arbeitenden Vorrichtungen ergibt sich eine leitungsabhängige Verzögerung. Es ist vorgesehen, dass diese Verzögerungen in Form von Startzeiten oder Stoppzeiten ermittelt und als Steuerdaten abgespeichert werden.

Eine Anwendung des Steuerungsverfahrens ist vorgesehen, indem beispielsweise ein Linienvereiniger mit einer Steuerungsvorrichtung versehen wird, die das Steuerungsverfahren zur Steuerung des Linienvereinigers anwendet. Die Steuerungsvorrichtung weist insbesondere einen oder mehrere wiederbeschreibbare Speicher, eine Zeitmessvorrichtung und/oder eine oder mehrere Schnittstellen zum Anschluss von Sensoren oder eines Kommunikationsbusses wie z. B. eine Ethernet-Schnittstelle auf. Das erfindungsgemäße Steuerungsverfahren kann als ablauffähiges Programm in einem nichtflüchtigen Speicher der Steuerungsvorrichtung gespeichert sein.

Ein Mikroprozessor ist zur Ablaufsteuerung vorgesehen, indem er das ablauffähige Programm abarbeitet.

Die Zuführvorrichtungen des Linienvereinigers können insbesondere als gleichartige oder identisch aufgebaute Module ausgebildet. Sie weisen jeweils ein über Umlenkrollen geführtes Endlosband auf. Weiter ist vorgesehen, dass die Zuführvorrichtung eine Kupplungsvorrichtung aufweist, die einen Kraftschluss mit einem Antriebsmotor herstellt und steuerbar ist. Die Kupplungsvorrichtungen können einzeln angesteuert werden und weisen einen pneumatischen oder elektrischen Hubzylinder auf, der das Endlosband mittels zweier Andruckrollen auf eine angetriebene Antriebswalze presst, um den Antrieb einzukuppeln.

Um eine gute Steuerung zu ermöglichen ist vorgesehen, dass zumindest ein Fördergutsensor vorgesehen ist, der an dem der Abführvorrichtung zugewandten Ende der Zuführvorrichtungen angeordnet ist und über alle Zuführvorrichtungen misst um die Position der Pakkungen festzustellen. Vorteilhafterweise sind mehrere Fördergutsensoren vorgesehen, wobei vorzugsweise jeder Zuführvorrichtung bzw. jedem Produktstrom ein Fördergutsensor zugeordnet ist. Ein Fördergutsensor kann dabei als Näherungssensor oder als Lichtschranke ausgebildet sein. Es ist insbesondere vorgesehen, dass die Steuerungsvorrichtung die Zuführvorrichtungen anhand der Signale der Fördergutsensoren so steuert, dass die Packungen exakt in einer Linie zueinander oder parallel zueinander ausgerichtet werden oder der Abstand zwischen den Packungen immer konstant ist. So können Packungsversätze im Feld durch die Fördervorrichtung automatisch ausgeglichen und dadurch Fehlfunktionen vermieden werden.

In einer Ausführung kann auch eine Abführlichtschranke vorgesehen sein, die an der Abführvorrichtung angeordnet ist und den Abtransportder Packungen überwacht. Ebenso kann am Anfang der Zuführvorrichtungen bzw. Zuführlinien eine über alle Zuführlinien messende Zufuhrlichtschranke vorgesehen sein, die die Zufuhr der Packungen oder Pakete überwacht.

Eine komfortable Einstellmöglichkeit ergibt sich, indem die Steuerungsvorrichtung beispielsweise einen Touchscreen als Eingabevorrichtung aufweist, über den Produktbezeichnungen eingegeben werden können, so dass die Steuerungsvorrichtung aus der Datenbank oder Tabelle die produktspezifischen Steuerdatendaten entnehmen und den Antrieb bzw, die Antriebsgeschwindigkeit bzw. die Steuerung der Zuführvorrichtungen entsprechend vornehmen kann.

In einer Ausgestaltung ist vorgesehen, dass die Steuerungsvorrichtung eine Zeitmessvorrichtung zum Messen der tatsächlichen Transportzeit von Fördergut aufweist. Durch einen Vergleich zwischen der tatsächlichen und der in dem Speicher hinterlegten durchschnittlichen Transportzeit kann die Steuervorrichtung Fehlerzustände erkennen und Melden. Solche Fehlerzustände können insbesondere sein: Zuviel Schlupf des Antriebs durch verölte oder verschlissene Bänder, oder fälschlicherweise nicht vollständig getrennte bzw. nicht vereinzelte Packungen. Solche Verpackungen werden üblicherweise in Gruppen von wenigstens 2 oder mehr, vorzugsweise 4, 6 oder 8 Packungen gleichzeitig gefertigt und beispielsweise mit einer Folie gemeinsam versiegelt. Die Folie wird anschließend durchtrennt um die Packungen zu vereinzeln. Nicht vereinzelte Packungen können dabei durch unvollständige Durchtrennung der Verpakkungsfolie entstehen und sind im Feld relativ häufig auftretende Fehlerquellen.

Die Steuerungsvorrichtung kann einen solchen erkannten Fehler melden und/oder die Transportvorrichtung stoppen um die Gefahr von Paketkollisionen zu verringern.

Eine vorteilhafte Ausgestaltung kann vorsehen, dass die Steuerungsvorrichtung Steuerungszeiten berücksichtigt, die manuell eingegeben, oder über die Zeitmessvorrichtung die Zeit erfasst, die zwischen einem Steuerbefehl und dessen Umsetzung in einem Sortiermodul vergeht. Die Umsetzung wird anhand eines oberhalb des jeweiligen Sortiermoduls angeordneten Sensors, der ein Produkt erfasst, ausgewertet, indem dieser eine Bewegung des Produkts registriert und an die Steuerungsvorrichtung meldet. Diese Zeitspanne, die für jedes Sortiermodul unterschiedlich sein kann und beispielsweise auf unterschiedlich lange Pneumatikleitungen oder auf sonstige konstruktiven Einflüsse oder Streuungen zurückzuführen ist, wird von der Steuerungsvorrichtung in einer Konfigurationstabelle gespeichert und bei der Steuerung der Sortiermodule automatisch berücksichtigt, so dass alle Sortiermodule so angesteuert werden können, dass der Abtransport der Produkte zu einem genau festgelegten Zeitpunkt erfolgt.

Eine Anwendung des des Steuerungsverfahrens kann beispielsweise in der Lebensmittelindustrie erfolgen, um Lebensmittel wie Wurst oder Käse zu transportieren und/oder zu sortieren, indem aus mehreren parallelen Produktströmen ein kontinuierlicher Produktstrom gemacht wird. Außerdem kann die erfindungsgemäße Fördervorrichtung im Logistikbereich beispielsweise bei der Paketsortierung oder Briefsortierung eingesetzt werden.

Weitere Ausführungsbeispiele der Erfindung sind in den Figuren dargestellt und der dazugehörenden Beschreibung beschrieben.

Es zeigen,
- Figur 1:: Eine Ansicht eines Linienvereinigers
- Figur 2:: Eine Detailansicht des Linienvereinigers im Bereich der Zuführvorrichtungen
- Figur 3:: Eine Detailansicht des Linienvereinigers im Bereich der Zuführvorrichtungen mit Produktsensoren
- Figur 4:: Eine Detailansicht der des Linienvereinigers mit zwei Zuführvorrichtungen
- Figur 5:: Ein Sortiermodul einer Zuführvorrichtung
- Figur 6:: Ein schematisches Schaltbild der Steuerungsvorrichtung

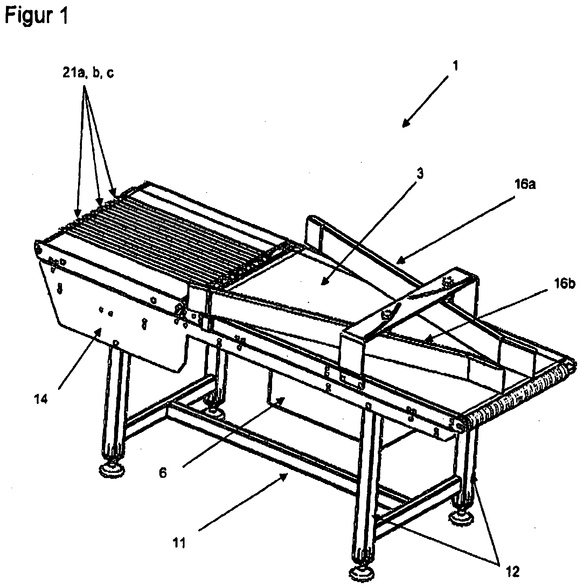

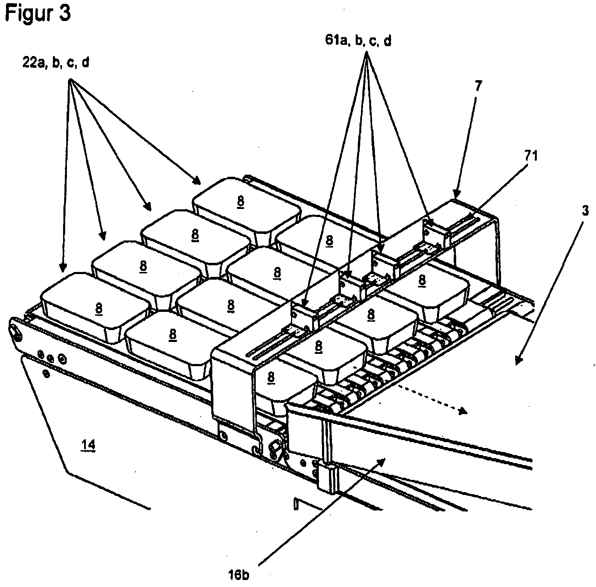

Die **Figur 1** zeigt einen Linienvereiniger 1 mit einem Gestell 11, welches mehrere parallele Zuführlinien bzw. Zuführvorrichtungen und 21a, b, c eine Abführlinie bzw. Abführvorrichtung 3 haltert. Über die Zuführlinien wird Fördergut in Förderrichtung hin zu der Abführlinie gefördert, indem das Fördergut in einzelnen Paketen 8 und in parallelen Produktströmen angeliefert wird, wie das in der **Figur 3** beispielhaft dargestellt ist.

Auf der Abführlinie sind zwei bewegliche Führungsschienen 16a und 16b angeordnet. Diese können manuell oder automatisch angetrieben verstellt werden und bilden einen Trichter, der die Produkte 8 in einer vorbestimmten Linie weiterfördert.

Die Zuführvorrichtungen 21a, b, c und das Abführband 3 sind jeweils über einen elektrischen Antriebsmotor 5 bzw. 52 angetrieben, der an dem Gestell 11 gehaltert ist. Eine an dem Gestell gehalterte, in einem dichten Gehäuse aufgenommene Steuerungsvorrichtung 6 übernimmt die Ablaufsteuerung der Fördervorrichtung. Das Gestell 11 weist höhenverstellbare Füße auf, um eventuelle Unebenheiten am Einsatzort ausgleichen zu können. Eine von dem Gestell abnehmbare Seitenwand 14 schützt die Antriebsmechanik der Fördervorrichtung 1.

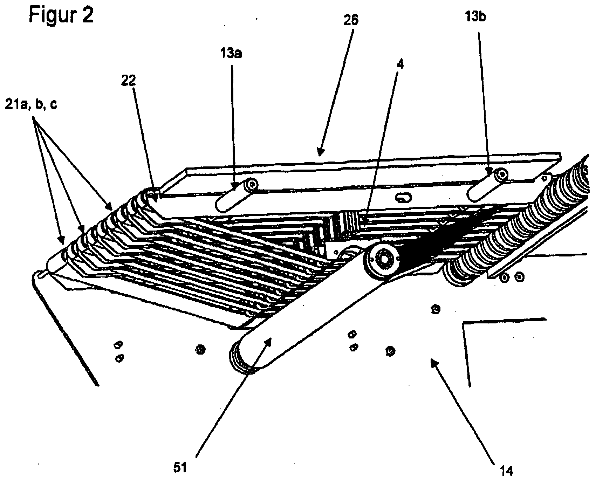

In der **Figur 2** ist ein Detailausschnitt im Bereich der Zuführvorrichtungen 21a, b, c bei abgenommener Seitenwand 14 gezeigt. Über eine gemeinsame Antriebswalze 51 werden die parallel angeordneten Zuführvorrichtungen 21a, b, c angetrieben. Die Zuführvorrichtungen 21a, b, c weisen jeweils ein oder mehrere Sortiermodule 22a, b, c auf, die über zwei Halteschienen 13a und 13b an dem Gestell 11 befestigt und jeweils als separate Baugruppe ausgeführt sind. Die Sortiermodule 22a, b, c können von dem Gestell 11 abgenommen bzw. ausgetauscht werden. Mehrere nebeneinander liegende Sortiermodule können zu einer Zuführvorrichtung kombiniert werden, um beispielsweise große Packungen zu transportieren. Dabei sind auch Varianten der Fördervorrichtung vorgesehen, die an einem Gestell 11 eine unterschiedliche Anzahl von Zuführvorrichtungen ermöglichen, entsprechend der praktischen Anforderungen.

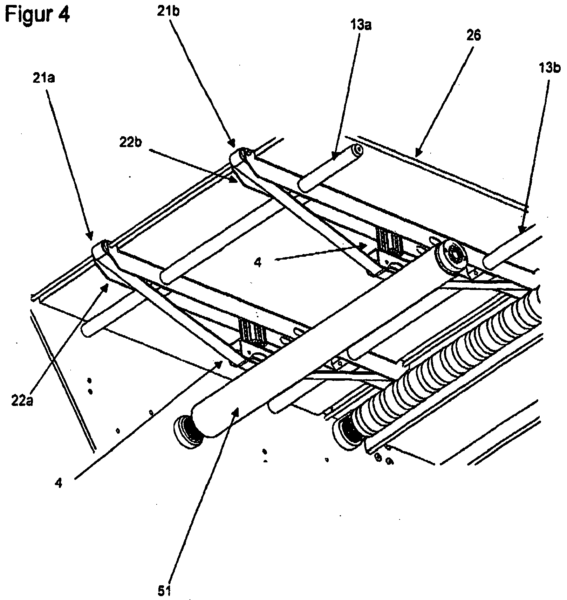

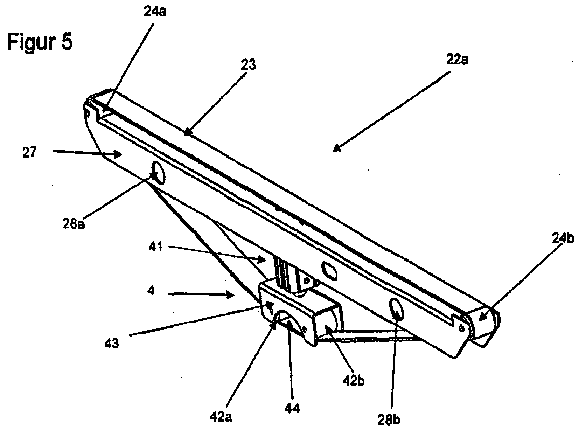

So ist in der **Figur 4** das Gestell 11 in einer Variante mit nurzwei Zuführvorrichtungen 21 a, b gezeigt. Die Zuführvorrichtungen werden dabei als eigenständige Sortiermodule ausgebildet, die in der Figur 5 näher dargestellt sind. Ein solches Sortiermodul 22 umfasst dabei einen Rahmen 27 an dem zwei endseitig angeordnete Umlenkrollen 24a und 24b gelagert sind überdieein Endlosband 23 umlaufend geführt ist. Weiter umfasst ein solches Sortiermodul 22 eine Kupplungsvorrichtung 4 zum Einkuppeln bzw. Auskuppeln der Antriebsverbindung mit der Antriebswalze 51. Der Rahmen 27 weist zwei Aufnahmen 28a und 28b auf, mit denen das Sortiermodul 22 auf den Halteschienen 13a bzw. 13b befestigt wird. Die Halteschienen 13a bzw. 13b greifen dazu jeweils in die Öffnungen der Aufnahmen 28a und 28b ein. die Sortiermodule können so auf den Halteschienen 13a bzw. 13b quer zur Förderrichtung verschoben und an einer beliebigen Position positioniert werden. Über eine Rast- oder Klemmvorrichtung kann dann das Sortiermodul auf den Halteschienen 13a bzw. 13b an gewünschter Position befestigt werden.

Auf seiner Oberseite weist der Rahmen 27 eine zwischen den Umlenkrollen 24a und 24b angeordnete, wannenförmige Vertiefung auf, in der eine Gleitplatte 26 miteinerglatten und gleitfähigen Oberfläche aufnehmbar ist. Die Gleitplatte 26 unterstützt das Obertrum des Endlosbandes 23 und erstreckt sich über die gesamte Breite der Fördervorrichtung 1. Die Gleitplatte 26 sorgt für einen verbesserten Transport indem sie die Pakete 8 zusätzlich abstützt. Zugleich bildet die Gleitplatte 26 eine geschlossene Oberfläche, die leicht zu reinigen ist.

Diese Kupplungsvorrichtungen 4 sind jeweils einzeln schaltbar und werden von der Steuerungsvorrichtung 6 angesteuert. Über einen Hubzylinder 41 werden zwei voneinander beabstandete Andruckrollen 42a, 42b, die über ein gemeinsames Halteprofil 43 miteinander verbunden sind auf die Antriebswalze zu bzw. von dieser weg bewegt. Das Halteprofil ist als U-Profil gegenüber den Andruckrollen 42a, 42b erhöht ausgeführt und dient so als seitliche Führung für das Endlosband 23. Das Halteprofil 43 weist eine zwischen den Andruckrollen 42a, 42b angeordnete Einbuchtung 44 auf, in die die Antriebswalze eingreifen kann um einen direkten Kontakt zwischen der Antriebswalze 51 und dem Halteprofil 43 zu verhindern.

Die Kraftverbindung zwischen der Antriebswalze 51 und den einzelnen Zuführvorrichtungen 21a, b, c wird hergestellt, indem der Hubzylinder 41 die beiden Andruckrollen 42a, b mit dem Endlosband 23 so auf die Antriebswalze 51 presst, dass das zwischen der Antriebswalze 51 und den Andruckrollen 42a, b hindurch laufende Endlosband einen Teil der Antriebswalze 51 umschlingt und so ein Reibschluss entsteht, so dass das Endlosband von der Drehung der Antriebswalze mitgenommen wird. Durch die Umschlingung ergibt sich eine relativ lange Kontaktstrecke zwischen dem Endlosband 23 und der Antriebswalze 51 und damit ein guter Kraftschluss. Eventueller Schlupf zwischen dem Endlosband 23 und der Antriebswalze 51 wird so verhindert.

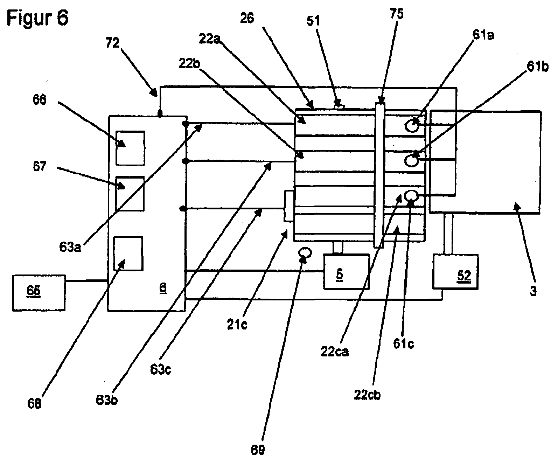

In der **Figur 6** ist ein schematischer Schaltplan für die Steuerungsvorrichtung 6 der des Linienvereinigers 1 bzw. der Fördervorrichtung 1 dargestellt. Die Steuerungsvorrichtung 6 weist einen Speicher 6 zum Speichern von produktabhängigen Steuerdaten, sowie eine Zeitmessvorrichtung 67 und einen Mikroprozessor 68 auf. Die Steuervorrichtung 6 weist Schnittstellen auf, über die sie den Antriebsmotor 5 der Sortiermodule 22a, 22b, 22c und den Antriebsmotor 52 des Abführbandes steuert. Die Zuführvorrichtung 21 besteht aus zwei parallel geschalteten Sortiermodulen 22ca, 22cb und kann breitere Pakete transportieren.

Die Steuerungsvorrichtung 6 ist über steckbare Verbindungsleitungen 63a, 63b, 63c mit den Kupplungsvorrichtungen der Sortiermodule 22a, 22b, 22c verbunden. Für einen Austausch der Sortiermodule 22a, 22b, 22c können die Verbindungsleitungen einfach ausgesteckt werden. Weiter ist jedem Sortiermodul eine Lichtschranke als Fördergutsensor 61a, 61b, 61c zugeordnet, die ebenfalls über steckbare Verbindungsleitungen 72 mit der Steuerungsvorrichtung 6 verbunden sind.

Die Fördergutsensoren sind, wie in der Figur 3 dargestellt, an einer Sensorbrücke 7 oberhalb der Zuführvorrichtungen befestigt. Die Sensorbrücke ist seitlich an dem Gestell 11 verschraubt und verläuft über die gesamte Breite des Linienvereinigers 1. Über Verstellschienen 71 können die Fördergutsensoren 61a, 61b, 61c quer zu der Förderrichtung verstellt und somit optimal zu den Produktlinien ausgerichtet werden.

Anhand der Signale der Fördergutsensoren 61a, 61b, 61c steuert die Steuerungsvorrichtung 6 die Kupplungsvorrichtungen 4 der Sortiermodule 22a, b, c so an, dass die auf den Sortiermodulen parallel transportierten Fördergüter 8 in einer Linie zueinander ausgerichtet sind. Das hat den Vorteil, dass die ungleichmäβigen Abstände zwischen angelieferten Packungen 8 von der Steuerungsvorrichtung 6 automatisch ausgeglichen werden, Am Beginn der Zuführvorrichtungen ist eine Lichtschranke 69 angeordnet, die eine ordnungsgemäße Anlieferung der Pakete überwacht. Zudem kann die Zuführlichtschranke 69 ein Startsignal für Zeitmessungen abgeben.

Die Steuerungsvorrichtung 6 kann durch den Vergleich der Signale der Fördergutsensoren 61a, 61b, 61c untereinander feststellen, ob die Packungen vereinzelt sind oder eventuell noch aufgrund eines Fehlers einer stromaufwärts der Förderstrecke angesiedelten Verpackungsmaschine miteinander verbunden sind. Verpackungen werden von den Verpackungsmaschinen üblicherweise in Gruppen von 2 oder mehr, insbesondere 4, 6 oder 8 Packungen gleichzeitig gefertigt und beispielsweise mit einer Folie versiegelt. Die Folie wird anschließend durchtrennt um die Packungen zu vereinzeln. Nicht vereinzelte Packungen können dabei durch unvollständige Durchtrennung der Verpackungsfolie entstehen und sind im Feld relativ häufig auftretende Fehlerquellen.

Weiter ist ein berührungsempfindlicher Bildschirm, Touchscreen 65, mit der Steuerungsvorrichtung 6 als Eingabevorrichtung zur Eingabe von Produktbezeichnungen verbunden. Alternativ kann die Steuerungsvorrichtung 6 die Packungsbezeichnungen über den Barcode-Scanner 75 direkt von den Packungen automatisch einlesen.

In dem Speicher 67 der Steuerungsvorrichtung 6 sind Steuerdaten wie Packungslänge, Transportzeit, Fördergutabstände bzw. Ansprechzeit der Sortiermodule abgespeichert. Anhand der eingegebenen Produktbezeichnungen kann die Steuerungsvorrichtung 6 die der eingegebenen Produktbezeichnung entsprechenden Fördergutdaten auslesen und die Sortiermodule 22a, b, c entsprechend den ausgelesenen Fördergutdaten so ansteuern, dass beispielsweise ein optimale Auslastung der Förderstrecke erreicht wird, indem zum Beispiel der Abstand der Fördergüter an die Packungslänge angepasstwird. So ist es möglich, im Mischbetrieb mit kleinen und großen Verpackungen bei kürzeren Verpackungen einen kleineren Abstand zwischen den Packungen zu fahren und damit den Durchsatz der Fördervorrichtung zu erhöhen.

Die Steuerungsvorrichtung 6 weist eine Zeitmessvorrichtung 66 zum Messen der tatsächlichen Transportzeit von Fördergut und einen Speicher 67 mit den durchschnittlichen Transportzeiten von Fördergut auf. Die Zeitmessung kann dabei beispielsweise erfolgen, indem die Zeit des Transports einer Packung auf dem Abführband bis zu einer nicht dargestellten Abführlichtschranke gemessen wird, oder indem die Zeit des Transports einer Packung auf einer Zuführvorrichtung von der Zuführlichtschranke 69 bis hin zu dem Fördergutsensor gemessen wird. Durch den Vergleich zwischen den gemessenen und den gespeicherten mittleren Transportzeiten kann die Steuerungsvorrichtung 6 bei Überschreitungen oder Unterschreitungen eine Fehlermeldung ausgeben und/oder den Transport abschalten um beispielsweise eine Kollision von Packungen zu verhindern.

## Patentansprüche

1. Steuerungsverfahren für einen Linienvereiniger zum Transport von Produktströmen aus einzelnen Produkten (8), wobei wenigstens zwei über Zuführvorrichtungen (21 a, 21 b, 21 c) geförderte Produktströme zu einem einzigen über eine Abführvorrichtung (3) geführten Produktstrom zusammengeführt werden indem die Produktförderung der Zuführvorrichtungen (21a, 21b, 21c) gesteuert wird,
**dadurch gekennzeichnet,**
**dass** die Steuerung der Zuführvorrichtungen (21a, 21b, 21c) anhand von Produktkennzeichnungen automatisch erfolgt, indem die zu einer Produktkennzeichnung gehörenden Steuerdaten aus einem Speicher (67) ausgelesen und die Zuführvorrichtungen (21a, 21b, 21c) den Steuerdaten entsprechend angesteuert werden und die Steuerdaten produktkennzeichnungsabhängig eine Geschwindigkeit und/oder Taktzeit und/oder Packungslänge und/oder Produktabstände und/ oder Produktabmessungen umfassen und Fehler detektiert werden indem die Steuerdaten eine mittlere Transportzeit der Produkte umfassen und über Sensoren die tatsächliche Transportzeit gemessen und mit der mittleren Transportzeit verglichen wird

2. Steuerungsverfahren nach Anspruch 1,
**dadurch gekennzeichnet,**
**dass** die Produktkennzeichnung manuell eingegeben oder über eine Lesevorrichtung, vorzugsweise einen Barcode-Scanner (75) oder eine RFID-Lesevorrichtung, automatisch eingelesen wird.

3. Steuerungsverfahren nach einem der Ansprüche 1 oder 2,
**dadurch gekennzeichnet,**
**dass** die Steuerdaten unter Berücksichtigung von Sensorsignalen in Steuerparameter umgerechnet werden, vorzugsweise indem die Position von einzelnen Produkten auf den Zuführvorrichtungen (21a, 21b, 21c) über Sensoren (61 a, 61 b, 61 c) gemessen wird und die Zuführvorrichtungen (21a, 21b, 21c) anhand der Sensorsignale gesteuert werden.

4. Steuerungsverfahren nach einem der vorhergehenden Ansprüche,
**dadurch gekennzeichnet,**
**dass** eine über alle Zuführvorrichtungen (21a, 21b, 21c) messende Lichtschranke (69) vorgesehen ist, deren Signale zur Ermittlung von Transportzeit und/oder Transportgeschwindigkeit der Produkte verwendet werden.

5. Steuerungsverfahren nach einem der vorhergehenden Ansprüche,
**dadurch gekennzeichnet,**
**dass** Fehler in der Produktpositionierung und/oder nicht vereinzelte Produkte detektiert werden, indem die Position von auf nebeneinanderliegenden Zuführlinien befindlichen Produkten über Sensoren (61a, 61b, 61c) verglichen wird.

6. Steuerungsverfahren nach einem der vorhergehenden Ansprüche,
**dadurch gekennzeichnet,**
**dass** die Steuerdaten einen minimalen Produktabstand umfassen und durch die Sensoren (61a, 61b, 61c) der tatsächliche Produktabstand gemessen wird und bei einer Unterschreitung des minimalen Produktabstandes die entsprechende Zuführvorrichtung (21 a, 21 b, 21 c) und/oder die Abführvorrichtung (3) gestoppt oder angetrieben wird, so dass der minimale Produktabstand eingehalten wird.

7. Steuerungsverfahren nach einem der vorhergehenden Ansprüche,
**dadurch gekennzeichnet,**
**dass** die Steuerdaten einen optimalen Produktabstand umfassen und durch die Sensoren (61a, 61b, 61c) der tatsächliche Produktabstand gemessen wird und bei einer Überschreitung des optimalen Produktabstandes die Zuführvorrichtung (21 a, 21 b, 21 c) und/oder die Abführvorrichtung (3) gestoppt oder angetrieben wird, so dass der optimale Produktabstand eingehalten wird.

8. Steuerungsverfahren nach einem der vorhergehenden Ansprüche,
**dadurch gekennzeichnet,**
**dass** automatisch zwei oder mehr nebeneinander liegende Zuführlinien zu einer Zuführlinie kombiniert werden, wenn die Produktbreite die Breite einer Zuführlinie übersteigt.

9. Steuerungsverfahren nach einem der vorhergehenden Ansprüche,
**dadurch gekennzeichnet,**
**dass** die Steuerdaten Kalibrierungsdaten umfassen, vorzugsweise eine oder mehrere hardwareabhängige Steuerzeiten von Antriebs (51) und/oder Ventilvorrichtungen.

10. Steuerungsverfahren nach einem der vorhergehenden Ansprüche,
**dadurch gekennzeichnet,**
**dass** für eine Zuführlinie die Steuerzeit von dem Aussenden eines Steuerbefehls bis zu dessen Umsetzung gemessen und die ermittelte Steuerzeit in einem Speicher (67) abgelegt und bei zukünftigen Steuerbefehlen berücksichtigt wird.

11. Steuerungsverfahren nach Anspruch 10,
**dadurch gekennzeichnet,**
**dass** bei der Speicherung der Steuerzeit aus bereits gespeicherten Steuerzeiten und der neu gemessenen Steuerzeit eine gewichtete Steuerzeit ermittelt und diese gespeichert wird.

12. Steuerungsverfahren nach Anspruch 10 oder 11,
**dadurch gekennzeichnet,**
**dass** als Steuerzeit die Startzeit und/oder die Stoppzeit ermittelt wird.

13. Linienvereiniger (1), mit wenigstens zwei motorisch angetriebenen Zuführvorrichtungen (21 a, b, c) und einer Abführvorrichtung (3), wobei den Zuführvorrichtungen wenigstens ein Sensor (61a, b, c, 69) zugeordnet ist und einer Steuerungsvorrichtung (6), die mit dem wenigstens einen Sensor und den Zuführvorrichtungen (21 a, b, c) zum Steuern derselben verbunden ist,
**dadurch gekennzeichnet,**
**dass** die Steuerungsvorrichtung (6) ein Steuerungsverfahren nach einem der vorhergehenden Ansprüche als ablauffähiges Programm aufweist, welches in einem nichtflüchtigen Speicher (67) der Steuerungsvorrichtung (6) abgespeichert ist.

## Claims

1. Control method for a line converger to transport product flows of individual products (8), wherein at least two product flows conveyed via feed devices (21a, 21b, 21c) are brought together into a single product flow guided by a discharge device (3) by the product conveying of the feed devices (21a, 21b, 21c) being controlled,
**characterised in that**
the control of the feed devices (21a, 21b, 21c) occurs automatically by means of product labels by the control data belonging to a product label being read from a memory (67) and the feed devices (21, 21b, 21c) being controlled according to the control data and the control data comprising a speed and/or cycle time and/or packaging length and/or product spacing and/or product dimensions depending on the product label and errors being detected by the control data comprising an average transport time of the products and the actual transport time being measured via sensors and being compared to the average transport time.

2. Control method according to claim 1,
**characterised in that**
the product label is entered manually or is read automatically via a reading device, preferably a barcode scanner (75) or an RFID reader.

3. Control method according to one of claims 1 or 2,
**characterised in that**
the control data is converted into control parameters by considering sensor signals, preferably by the position of individual products on the feed devices (21a, 21b, 21c) being measured via sensors (61a, 61b, 61c) and the feed devices (21a, 21b, 21c) being controlled by means of the sensor signals.

4. Control method according to one of the preceding claims,
**characterised in that**
a light barrier (69) which measures over all feed devices (21a, 21b, 21c) is provided, the signals of which are used to determine transport time and/or transport speed of the products.

5. Control method according to one of the preceding claims,
**characterised in that**
errors in the product positioning and/or non-isolated products are detected by the position of products located on feed lines lying next to one another being compared via sensors (61a, 61b, 61c).

6. Control method according to one of the preceding claims,
**characterised in that**
the control data comprises a minimum product spacing and the actual product spacing is measured by the sensors (61a, 61b, 61c) and the corresponding feed device (21a, 21b, 21c) and/or the discharge device (3) is stopped or driven in the event that the minimum product spacing is fallen below, such that the minimum product spacing is adhered to.

7. Control method according to one of the preceding claims,
**characterised in that**
the control data comprises an optimum product spacing and the actual product spacing is measured by the sensors (61a, 61b, 61c), and the feed device (21a, 21b, 21c) and/or the discharge device (3) is stopped or driven in the event that the optimum product spacing is exceeded, such that the optimum product spacing is adhered to.

8. Control method according to one of the preceding claims,
**characterised in that**
two or more feed lines lying next to each other are automatically combined into one feed line if the product width exceeds the width of one feed line.

9. Control method according to one of the preceding claims,
**characterised in that**
the control data comprises calibration data, preferably one or more control times of drives (51) and/or valve devices which are dependent on hardware.

10. Control method according to one of the preceding claims,
**characterised in that**
the control time is measured from the emission of a control command up to the implementation thereof for a feed line and the determined control time is filed in a memory (67) and is considered for future control commands.

11. Control method according to claim 10,
**characterised in that**
during the storage of the control time, a weighted control time is determined from already stored control times and the newly measured control time and this is stored.

12. Control method according to claim 10 or 11,
**characterised in that**
the start time and/or the stop time is determined as a control time.

13. Line converger (1), having at least two feed devices (21a, b, c) driven via motor, and a discharge device (3), wherein at least one sensor (61a, b, c, 69) is allocated to the feed devices, and having a control device (6) which is connected to the at least one sensor and the feed devices (21a, b, c) to control the same,
**characterised in that**
the control device (6) has a control method according to one of the preceding claims as an executable program which is stored in a non-fluid memory (67) of the control device (6).

## Revendications

1. Procédé de commande pour un dispositif d'unification de lignes destiné au transport de flux de produits composés de produits (8) individuels, au moins deux flux de produits transportés par le biais de dispositifs d'amenée (21a, 21b, 21c) étant réunis en un unique flux de produits guidé par le biais d'un dispositif d'évacuation (3) par le fait que le transport de produits des dispositifs d'amenée (21a, 21b, 21c) est commandé,
**caractérisé en ce que**
la commande des dispositifs d'amenée (21a, 21b, 21c) s'effectue automatiquement à l'aide d'identifications de produits par le fait que les données de commande appartenant à une identification de produits sont extraites d'une mémoire (67) et les dispositifs d'amenée (21a, 21b, 21c) sont pilotés en fonction des données de commande, et les données de commande comprennent, en fonction de l'identification de produits, une vitesse et/ou une cadence et/ou une longueur d'emballage et des intervalles de produits et/ou des dimensions de produits, et des erreurs sont détectées par le fait que les données de commande comprennent un temps de transport moyen des produits, et le temps de transport effectif est mesuré par le biais de capteurs et comparé avec le temps de transport moyen.

2. Procédé de commande selon la revendication 1,
**caractérisé en ce que**
l'identification de produits est entrée manuellement ou est lue automatiquement par le biais d'un dispositif de lecture, de préférence un lecteur de codes à barres (75) ou un dispositif de lecture RFID.

3. Procédé de commande selon l'une des revendications 1 ou 2,
**caractérisé en ce que**,
en prenant en compte des signaux de capteurs, les données de commande sont converties en paramètres de commande, de préférence par le fait que la position de produits individuels sur les dispositifs d'amenée (21a, 21b, 21c) est mesurée par le biais de capteurs (61a, 61b, 61c) et les dispositifs d'amenée (21a, 21b, 21c) sont commandés à l'aide des signaux de capteurs.

4. Procédé de commande selon l'une des revendications précédentes,
**caractérisé en ce**
**qu'**il est prévu une barrière photoélectrique, procédant à des mesures sur tous les dispositifs d'amenée (21a, 21b, 21c), dont les signaux sont utilisés pour la détermination du temps de transport et/ou de la vitesse de transport des produits.

5. Procédé de commande selon l'une des revendications précédentes,
**caractérisé en ce que**
des erreurs dans le positionnement de produits et/ou des produits non individualisés sont détectés par le fait que la position de produits situés sur des lignes d'amenées juxtaposées est comparée par le biais de capteurs (61a, 61b, 61c).

6. Procédé de commande selon l'une des revendications précédentes,
**caractérisé en ce que**
les données de commande comprennent un intervalle minimal de produits et l'intervalle de produits effectif est mesuré par les capteurs (61a, 61b, 61c) et, en cas de passage sous l'intervalle minimal de produits, le dispositif d'amenée (21a, 21 b, 21 c) correspondant et/ou le dispositif d'évacuation (3) est arrêté ou entraîné de telle sorte que l'intervalle minimal de produits est maintenu.

7. Procédé de commande selon l'une des revendications précédentes,
**caractérisé en ce que**
les données de commande comprennent un intervalle optimal de produits et l'intervalle de produits effectif est mesuré par les capteurs (61a, 61b, 61c) et, en cas de dépassement de l'intervalle optimal de produits, le dispositif d'amenée (21a, 21b, 21c) et/ou le dispositif d'évacuation (3) est arrêté ou entraîné de telle sorte que l'intervalle optimal de produits est maintenu.

8. Procédé de commande selon l'une des revendications précédentes,
**caractérisé en ce que**
deux lignes d'amenée juxtaposées ou davantage sont automatiquement combinées en une ligne d'amenée si la largeur de produits dépasse la largeur d'une ligne d'amenée.

9. Procédé de commande selon l'une des revendications précédentes,
**caractérisé en ce que**
les données de commande comprennent des données d'étalonnage, de préférence un ou plusieurs temps de commande, dépendants du matériel, d'entraînements (51) et/ou de dispositifs de vannes.

10. Procédé de commande selon l'une des revendications précédentes,
**caractérisé en ce que**,
pour une ligne d'amenée, le temps de commande depuis l'émission d'une instruction de commande jusqu'à sa mise en oeuvre est mesuré, et le temps de commande déterminé est enregistré dans une mémoire (67) et pris en compte lors d'instructions de commande ultérieures.

11. Procédé de commande selon la revendication 10,
**caractérisé en ce que**,
lors de l'enregistrement du temps de commande, un temps de commande pondéré est déterminé à partir de temps de commande déjà enregistrés et du temps de commande nouvellement mesuré et ce temps de commande pondéré est enregistré.

12. Procédé de commande selon la revendication 10 ou 11,
**caractérisé en ce que**
le temps de démarrage et/ou le temps d'arrêt est déterminé en tant que temps de commande.

13. Dispositif d'unification de lignes (1), avec au moins deux dispositifs d'amenée (21a, b, c) entraînés par moteur et avec un dispositif d'évacuation (3), au moins un capteur (61a, b, c, 69) étant affecté aux dispositifs d'amenée, et avec un dispositif de commande (6) qui est raccordé au capteur au moins au nombre de un et aux dispositifs d'amenée (21 a, b, c) pour la commande de ceux-ci,
**caractérisé en ce que**
le dispositif de commande (6) présente un procédé de commande selon l'une des revendications précédentes en tant que programme exécutable qui est enregistré dans une mémoire (67) non volatile du dispositif de commande (6).
